# EUROPEAN PATENT APPLICATION

(11) **EP 4 708 728 A1**
(43) Date of publication of application: **11.03.2026**
(21) Application number: 25191353.9
(22) Date of filing: 23.07.2025
(51) Int. Cl.: H04B 10/2513, H04B 10/50, H04B 10/58

(54) **COMPACT ETALON-BASED DISPERSION COMPENSATION IN WDM OPTICAL SYSTEMS**

(30) Priority: 31.07.2024 US 202463678015 P; 21.01.2025 US 202519032712
(71) Applicant: II-VI Delaware, Inc., Wilmington, DE 19890 (US)
(72) Inventor: LOPEZ, Roberto Jaime Rodes, Wilmington, 19890 (US); DU, Tengda, Wilmington, 19890 (US); MATSUI, Yasuhiro, Wilmington, 19890 (US); BHATT, Vipul, Wilmington, 19890 (US); XU, Xiaojie, Wilmington, 19890 (US); XU, Leo, Wilmington, 19890 (US); LI, Yang, Wilmington, 19890 (US); BARBAROSSA, Giovanni, Wilmington, 19890 (US); PARTHASARATHI, Sanjai, Wilmington, 19890 (US); ZHENG, Baozhong, Wilmington, 19890 (US); XUE, Tingyu, Wilmington, 19890 (US)
(74) Representative: Schmidt, Christian

(57) **Abstract**

A GT etalon-based compensator is disclosed that may be utilized in combination with a wavelength-division multiplexer at a transmitter location to provide a degree of pre-compensation for signals operating at those wavelengths known to experience chromatic dispersion between transmitter and receiver locations. The GT etalon-based compensator utilizes individual dispersion compensators that are configured as transmissive devices by using a polarization beam splitter, GT etalon, and a pair of quarter-wave plates in a manner that maintains the output signal path colinear with the input signal path, and also maintains the linear polarization state of the propagating signal. Multiple ones of these transmissive dispersion compensators may be cascaded in a back-to-back arrangement within the signal path of a particular channel to provide a larger measure of pre-compensation for wavelengths that are known to be more susceptible to chromatic compensation.

## Description

### Cross-Reference to Related Applications

This application claims priority from U.S. Provisional Application No. 63/678,015, filed July 31, 2024 and herein incorporated by reference.

### Technical Field

This disclosure is directed to optical communication systems and, more particularly, to the design of a compact Gires-Tournois (GT) etalon-based dispersion compensation arrangement for use in the multi-channel environment of wavelength-division multiplexing (WDM) optical communication systems.

### Background of the Disclosure

Chromatic dispersion is typically caused by different frequency components of optical signals having slightly different group velocities when transmitted through a chromatically dispersive medium. As a result, different frequency components of a transmitted optical signal will propagate at different speeds, thus arriving at a receiver at slightly different times. As a result, optical signal pulses broaden and lose their shape as they propagate along an optical fiber span between a transmitter and receiver. When pulse broadening becomes too great, adjacent pulses begin to suffer interference, limiting the maximum data rate that can be used without incurring an excessive bit error rate.

Problems associated with chromatic dispersion are compounded in optical systems supporting multiple wavelengths (i.e., multiple channels) between a transmitter and receiver, since different wavelengths experience different amounts of dispersion over the same span length. In most cases, optical systems that support the use of multiple wavelengths utilize wavelength-based multiplexers and demultiplexers at the transmitter and receiver, respectively, so that a single communication fiber supports the transmission of all wavelengths.

To date, arrangements for addressing chromatic dispersion in WDM optical communication systems either rely on the use of specialty transmission fiber that provides a degree of wavelength-specific compensation, or the use of individual electronic-based circuit arrangements in combination with each demultiplexed channel at a receiver to correct for chromatic dispersion accumulated along the signal path. Optical fiber-based solutions in the form of dispersion-compensated fiber and/or the use of fiber Bragg gratings (FBGs) are reliable passive components, but as the number of "lanes" (channels) within the system continue to increase, it becomes difficult to utilize fiber-based solutions in the standard small form-factor package (SFP) footprint. For example, it has been found difficult to implement fiber-based solutions in the current eight-lane (octal) SFP (OSFP) optical transceiver configuration. Advanced systems may utilize a digital signal processor (DSP) component within the receiver to perform electronic dispersion compensation. These DSP-based receivers are by nature complex and expensive.

Said another way, both of these approaches are not only difficult to implement, but add expense and size demands to the system. These problems will become even greater as newer systems are being developed to support ever-increasing numbers of individual channels.

### Summary of the Disclosure

Disclosed herein is a design of a compact dispersion compensation component that may be incorporated within a multi-channel optical transmitter assembly in a manner that provides channel-specific compensation prior to launching the multi-channel signal into the network. In particular, a GT etalon-based compensator is disclosed that may be utilized in combination with a wavelength-division multiplexer at a transmitter location to provide a degree of pre-compensation for signals operating at those wavelengths known to experience chromatic dispersion between transmitter and receiver locations.

In one embodiment, the GT etalon-based compensator utilizes individual dispersion compensators that are configured as transmissive devices by using a polarization beam splitter, GT etalon, and a pair of quarter-wave plates in a manner that maintains the output signal path colinear with the input signal path, and also maintains the linear polarization state of the propagating signal. Multiple ones of these transmissive dispersion compensators may be cascaded in a back-to-back arrangement within the signal path of a particular channel to provide a larger measure of pre-compensation for wavelengths that are known to be more susceptible to chromatic compensation.

In another embodiment, a monolithic arrangement of a Z-block configured wavelength division multiplexer and GT etalon-based compensator is contemplated as creating a compact arrangement for performing both functions within a multi-channel optical transmitter.

One example may take the form of a multi-channel optical transmitter that includes a laser engine, a wavelength-division multiplexer, and a GT etalon-based dispersion compensator. The laser engine includes a plurality of N individual laser devices operating at different wavelengths, with each individual laser device responsive to a unique input data signal and creating a plurality of N optical signals operating at wavelengths λ₁ - λ_{N} (also referred to as a plurality of N channels). The wavelength-division multiplexer receives as inputs the plurality of N optical signals for combining the plurality of N optical signals to create a single, N-channel output signal for transmission along an optical fiber signal path. The GT etalon-based dispersion compensator is positioned between the laser engine and the wavelength-division multiplexer, and includes individual GT etalon devices disposed along signal paths associated with identified wavelengths within the range λ₁ - λ_{N} that are subject to chromatic dispersion during transmission along the optical fiber signal path, wherein each GT etalon device creates phase-shifted predistortion to signals at selected wavelengths passing therethrough and the number of individual GT etalon devices disposed along each channel is determined as a function of the level of chromatic dispersion.

Other and further embodiments and advantages of the disclosed GT etalon-based dispersion compensation arrangement will become apparent during the course of the following discussion and by reference to the accompanying drawings.

### Brief Description of the Drawings

Referring now to the drawings,
FIG. 1 is a simplified top view of an example 8-channel optical transmitter that is configured to incorporate GT etalon-based dispersion compensators;
FIG. 2 is a detailed illustration of an example of a transmissive dispersion compensator that may be used in the transmitter of FIG. 1;
FIG. 3 is a side view of the arrangement of FIG. 1;
FIG. 4 is a dispersion response associated with the use of a pair of cascaded GT etalon-based dispersion compensation elements;
FIG. 5 is a dispersion response similar to FIG. 4, but in this case associated with a set of eight elements;
FIG. 6 shows yet another dispersion response, in this case utilizing the Venier effect associated with overlapping multiple responses to create a precise, tunable passband;
FIG. 7 is an example of another embodiment of this disclosure, illustrating a monolithic combination of a wavelength-division multiplexer and GT etalon-based dispersion compensator; and
FIG. 8 is a simplified diagram of an optical transmitter utilizing the monolithic combination shown in FIG. 7.

### Detailed Description

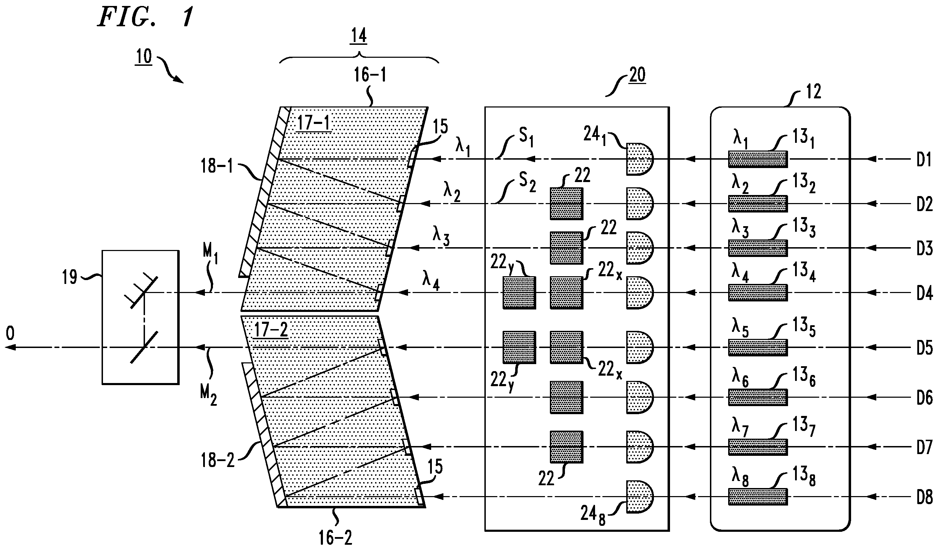

It is proposed to address problems associated with compensation for wavelength-dependent chromatic dispersion by the incorporation of one or more GT etalon-based compensators along each channel in a multi-channel optical transmitter of a WDM optical communication system. FIG. 1 is a simplified top view of an example 8-channel optical transmitter 10 that is configured to incorporate GT etalon-based dispersion compensators along selected signal paths, providing a degree of pre-compensation to the different wavelengths prior to being multiplexed onto the output signal path. Transmitter 10 includes a laser engine component 12 used to create the parallel set of eight optical data signals S1 - S8 (eight in this case, N in general), based upon a set of digital (electrical) data streams D1 - D8. Data streams D1 - D8 are used in this arrangement to modulate an array of eight individual lasers 13₁ - 13₈ operating at different wavelengths λ₁ - λ₈. Other active laser source arrangements may be used; for example, distributed feedback lasers or externally modulated lasers. A wavelength multiplexer 14 is disposed in optical alignment with laser engine 12 and functions in a known manner to combine the individual signals operating at wavelengths λ₁ - λ₈ onto a single output path O, as shown.

In this particular example, multiplexer 14 includes a first Z-block multiplexer configuration 16-1 for combining the signals operating on wavelengths λ₁ - λ₄ to create a first multiplexed signal group M₁, and a second Z-block multiplexer 16-2 for combining the signals operating on wavelengths λ₅ - λ₈ to create a second multiplexed signal group M₂. Z-blocks 16-1, 16-2 are each angled in the manner shown and include a reflective rear surface 18-1, 18-2 (respectively) that functions to combine the signals as they zig-zig back and forth within an optical substrate 17. A combiner 19 is used to couple the multiplexed signal groups together to form multi-channel output signal O. It is to be understood that the illustrated Z-block configuration is only one example of a wavelength multiplexer that may be used, other arrangements well-known in the art (for example, an arrayed waveguiding component) may also be used in arrangements of the disclosed pre-compensator.

In accordance with the principles of the present disclosure, the operation of transmitter 10 is enhanced by intentionally providing dispersion pre-compensation to those signal wavelengths known to be particularly affected by chromatic dispersion along the signal path from transmitter to receiver (the associated receiver not shown in FIG. 1). A GT etalon-based dispersion compensator 20 is shown in FIG. 1 as disposed between laser engine 12 and multiplexer 14, where compensator 20 is configured to provide an individual amount of pre-compensation for signals operating at each wavelength λ₁ - λ₈ (if necessary), where the pre-compensation can be thought of as cancelling out a portion of the dispersion that subsequently occurs during propagation over the signal path from transmitter 10 to a receiver (not shown). That is, the pre-compensation alters the conventional shape of the signal pulses by adding phase delay, where the dispersion experienced by the signal pulses along the transmission path functions to undo the added pre-compensation, restoring the signal pulses to their original form.

The disclosed GT etalon-based dispersion compensator 20 is shown as comprising a plurality of individual transmissive dispersion compensators 22 that are positioned to receive the output signals from the individual laser diodes 13, with the number of individual dispersion compensators used for each channel is a function of the known dispersion experienced by the operating wavelengths used for the different channels. In this arrangement, dispersion compensator 20 also includes a lens array 24, where the output from each laser 13ᵢ initially passes through an associated collimating lens 24ᵢ prior to entering any dispersion compensator 22 that may be included along its signal path.

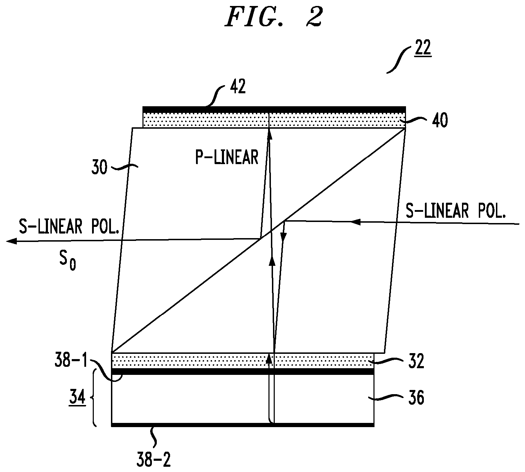

As will be discussed below in association with FIG. 2, a transmissive dispersion compensator 22 functions in accordance with its included GT etalon to introduce a controlled amount of phase shift to the optical signal passing through. By knowing *a priori* the wavelengths used for transmission along each channel, the number of individual dispersion compensators required to adequately account for the amount of dispersion accumulated between the transmitter and receiver may be determined. The compact, transmissive formation of dispersion compensators 22 allows for a cascaded arrangement to be formed that takes up little space in the transmitter, but is able to provide the desired amount of pre-compensation.

In the example arrangement as shown in FIG. 1, laser diodes 13₄ and 13₅ operate at wavelengths λ₄, λ₅ that are known to exhibit the most dispersion. Thus for this example, a cascaded pair of transmissive dispersion compensators 22x, 22y is utilized with each of these lasers, disposed as shown. As also shown in FIG. 1, laser diodes 13₄, 13₅ are positioned in the middle of the laser array; this is an intentional arrangement to eliminate the need for these two output beams to bounce back-and-forth within Z-blocks 16-1, 16-2; instead, their pre-compensated beams pass directly through Z-blocks 16 and into coupler 19.

At the opposite extreme, laser diodes 13₁, 13₈ are identified as operating at wavelengths that exhibit little, if any, chromatic dispersion along the signal path between transmitter and receiver. Thus, as evident in FIG. 1, no pre-compensation is required and no dispersion compensators 22 are positioned along these signal paths. A single transmissive dispersion compensator 22 is shown as used with the remaining laser diodes 13, providing a sufficient amount of pre-compensation for the signals operating at their specific wavelengths. The utilization of GT etalon-based dispersion compensator 20 in this manner is considered to achieve a compact, yet individually-tailored arrangement for mitigating chromatic dispersion within a WDM communication system.

FIG. 2 is a diagram of an example transmissive dispersion compensator 22 that is useful in understanding the working principle of providing GT etalon-based dispersion compensation in accordance with this disclosure. Transmissive dispersion compensator 22 is shown as including a polarization beam splitter (PBS) 30 that receives a collimated, linearly polarized output optical signal from collimating lens 24 (see FIG. 1). As shown by the arrow, this linearly polarized optical signal is re-directed downward by PBS 30 and is then incident on a first quarter-wave plate (QWP) 32. QWP 32 converts the polarization of the optical signal from linear to circular prior to passing the optical signal into an adjacent GT etalon element 34.

GT etalon element 34 includes a transparent plate 36 having opposing reflective surfaces 38-1 and 38-2, where surface 38-1 is highly reflective (but not completely), and surface 38-2 is formed to have an essentially 100% reflectivity. As a result of multi-beam interference, light incident on surface 38-1 will be directed into plate 36, and return with an effective phase shift that depends strongly on the wavelength λ of the incident light. The thickness of plate 36, as well as its refractive index *n,* are factors used in determining the amount of phase shift that is provided. As well-known in the art, GT etalon element 34 functions as a reflective device, where the input and output light both traverse reflective surface 38-1.

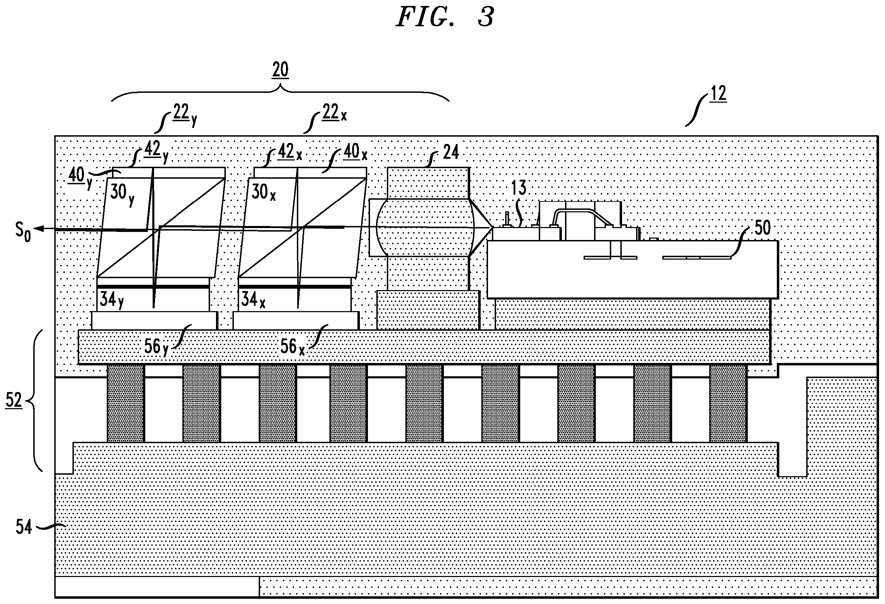

The phase-shifted output from GT etalon 34 is still circularly polarized as it enters QWP 32 a second time. On this trip through QWP 32, the circularly polarized, phase-shifted signal again becomes linearly polarized, but in a direction orthogonal to the original input (e.g., an S-linear input becomes a P-linear output). This orthogonally-polarized (and phase-shifted) signal passes directly through PBS 30, and into a second QWP 40, which includes a highly-reflective (100%) coating 42 on its opposing surface, so as to re-direct the signal for another pass through second QWP 40, thereby creating an S-polarized, phase-shifted output signal S_{ϕ}. The addition of this phase shifting is understood as the pre-compensation which is added to the original input signal. The output signal S_{ϕ} may either be directed into a following transmissive dispersion compensator 22 (as shown in the following FIG. 3), or utilized as the pre-compensated signal presented as an input to multiplexer 14.

FIG. 3 is a side view of laser engine 12 and GT etalon-based dispersion compensator 20, particularly illustrating the components used with "channel 4", as depicted in FIG. 1. Laser engine 12 is shown in this view as including laser diode 13₄, which operates at the wavelength λ₄ that is presumed to be susceptible to chromatic dispersion, as discussed above. Laser diode 13₄ is shown as disposed on a submount element 50, which in this particular example is positioned on a thermo-electric cooler (TEC) 52 that is itself positioned on a substrate 54. Collimating lens 24₄ of GT etalon-based dispersion compensator 20 is positioned in optical alignment with the output of laser diode 13₄ to form the linearly-polarized, collimated beam input to a first transmissive dispersion compensator 22x.

As discussed above in association with the diagram of FIG. 2, the optical signal passing through a first transmissive dispersion compensator 22x experiences a first amount of phase shift by virtue of included GT etalon 34x. This phase-shifted output signal (which remains linearly polarized) then passes through a second transmissive dispersion compensator 22y, which introduces additional phase shifting. It is an additional aspect of this disclosure that the orientation of a specific collimating lens 24i with respect to a following transmissive dispersion compensator 22i may be adjusted to control the amount of phase shifting that is generated, since the angle of incidence will carry through with respect to the angle of incidence on GT etalon 34i. Indeed, in one example assembly procedure the positioning of collimating lens 24i with respect to transmissive dispersion compensator 22i may be actively adjusted until a desired amount of phase shifting is achieved.

In the configuration as shown in FIG. 3, first and second transmissive dispersion compensators 22x, 22y are positioned on submounts 56x and 56y, respectively, to maintain optical alignment, and are also shown as mounted on TEC 52. This is to be considered as one example only, and in other arrangements GT etalon-based dispersion compensator may not require the use of a TEC device to control its operating temperature.

Advantageously, and as shown in FIG. 3, the use of a transmissive dispersion compensator allows for a compact configuration to be employed, in this case showing the pair of compensators 22x, 22y in close proximity to one another. Again, this is only one example; other arrangements may utilize several additional GT etalons in a cascaded arrangement to provide the desired amount of pre-compensation to a selected optical signal.

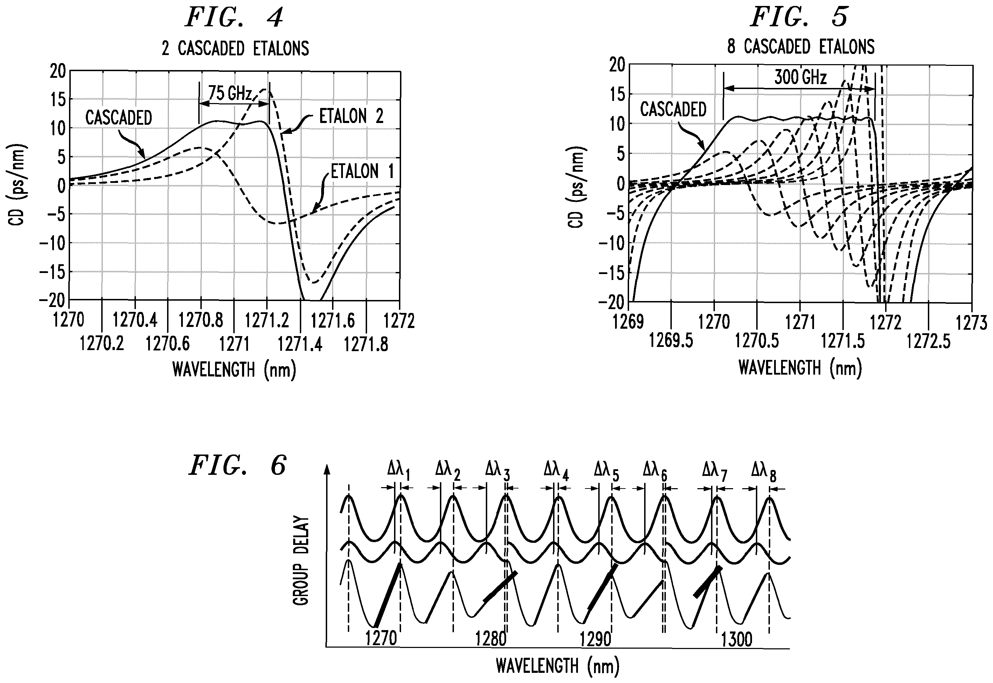

FIG. 4 illustrates one example dispersion response that may be achieved by cascading first and second transmissive dispersion compensators 22x, 22y. In this case, their combination is able to form a relatively flat passband of 75 GHz around the wavelength of 1271 nm. FIG. 5 is an example of a result associated with using a set of eight cascaded compensators, producing a passband having a width of 300 GHz. The Vernier effect of cascaded transmissive dispersion compensators 22 is shown in FIG. 6, which illustrates the capability to provide dispersion compensation with a high degree of precision.

The example of FIGs. 1-3 is associated with an embodiment that utilizes separate components for multiplexer 14 and GT etalon-based dispersion compensator 20. This is to be considered as just one example and, particularly, an example well-suited for use in providing pre-compensation in existing (legacy) multi-channel optical transmitters, including installed systems.

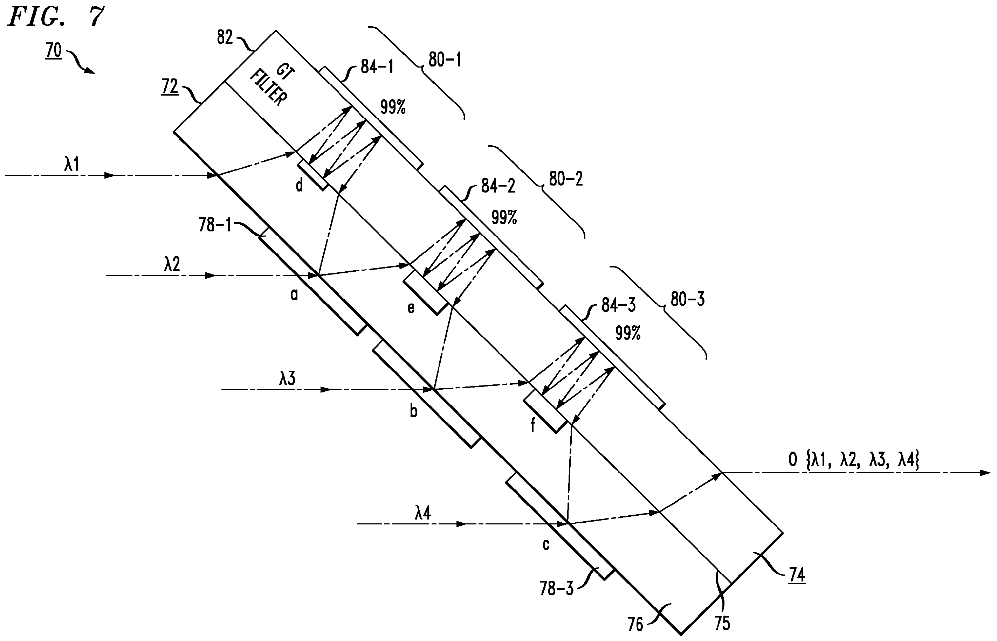

FIG. 7 illustrates another example of providing pre-compensation in a multi-channel optical transmitter where the multiplexer functionality and the GT etalon-based dispersion compensation are integrated into a single component. In particular, an integrated multiplexer/pre-compensator 70 is shown in FIG. 7 as a monolithic structure including a Z-block multiplexer 72 and a GT etalon-based compensator 74. Z-block multiplexer 72 includes an optical substrate 76 disposed at an angle that permits the wavelengths (here shown as λ1 - λ4) to be combined along a single output path. A set of thin-film filters 78 are disposed as shown along input surface 73 of multiplexer 72 and are designed to pass certain wavelengths, reflecting all others. For example, thin-film filter 78-1 is designed to pass wavelength λ2 and reflect at least wavelength λ1; similarly, thin-film filter 78-2 is designed to pass wavelength λ3 and reflect at least wavelengths λ1 and λ2.

GT etalon-based compensator 74 is shown as disposed along output surface 75 of multiplexer 72. As discussed below, compensator 74 comprises a set of three individual GT etalon devices 80-1, 80-2, and 80-3 that interact with signals exiting output surface 75 of multiplexer 72 in a manner that ultimately creates a multiplexed output beam with different amounts of pre-compensation applied to each individual wavelength.

In particular, compensator 74 comprises a single optical plate 82, with a set of three individual reflectors 84-1, 84-2, 84-3 disposed at defined locations along an output surface 83 of optical plate 82, the defined locations being the positions of GT etalon devices 80-1, 80-2, and 80-3. A set of partially-reflecting opposing reflectors 86-1, 86-2, and 86-6 is positioned to finalize the GT etalon structure and disposed at the interface between optical substrate 76 of multiplexer 72 and optical plate 74 of compensator 72.

The set of three individual GT etalon devices 80-1, 80-2, and 80-3 form a cascaded arrangement, where in this example the signal operating at λ1 will pass through all three etalon devices before exiting integrated multiplexer/pre-compensator 70. Therefore, in the assembly of the structure, the wavelength requiring the highest level of pre-compensation is to be used as λ1. Referring to FIG. 7, the signal operating at λ1 first passes directly through multiplexer 72, and then is directed into the first GT etalon device 80-1, where it is initially phase-shifted through multi-beam interference. This phase shifted beam is subsequently directed back into multiplexer 72 and is reflected by first thin-film filter 78-1, so as to be re-directed back into multiplexer/pre-compensator 70 and, more particularly, into second GT etalon device 80-2 (and is further phase shifted in the manner described above). The same process repeats, where the twice-shifted signal at λ1 is reflected by second thin-film filter 78-1 and additionally phase shifted within third GT etalon device 80-3, and ultimately being reflected by third thin-film filter 78-3 onto the output signal path O.

The wavelength needing to pass through two GT etalon devices in the cascaded arrangement is designated for use as λ2, where as shown this input passes through first thin-film filter 78-1 and is directed into second GT etalon device 80-2. The phase-shifted signal at λ2 then exits compensator 74 and is reflected by thin-film filter 78-2 of multiplexer 72 so as to be re-directed into third GT-based etalon 80-3. The signal operating at λ3 is shown as passing through only GT-based etalon 80-3 before being re-directed by third thin-film filter 78-3 along output signal path O. Lastly, the signal operating at λ4 is shown as passing through the final thin-film filter 78-3 and being joined onto output signal path O without passing through any GT etalon-based pre-compensation device.

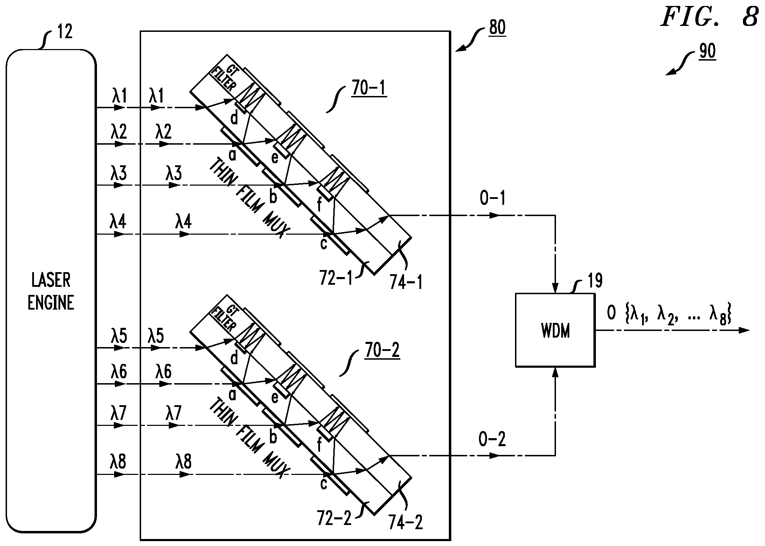

FIG. 8 is an example diagram of a compact optical transmitter 90 based upon the use of integrated multiplexer/pre-compensator 70 discussed above. In this embodiment a pair of integrated multiplexer/pre-compensators 70-1, 70-2 is utilized, with each receiving a set of four input signals to provide a comparison to the eight-channel optical transmitter 10 described above. Here, the pair of integrated multiplexer/pre-compensators 70-1, 70-2 is assembled as a component 80 that is disposed between laser engine 12 and output combiner 19. Again, the illustrative use with an eight-channel transmitter is exemplary only. The integrated structure of this embodiment is considered to enable a large count mux-demux operation without encountering the physical size and optical alignment problems of the prior art, while still providing the compensation capability for a large number of individual channels.

Although the present disclosure has been illustrated and described herein with reference to preferred embodiments and specific examples thereof, it will be readily apparent to those of ordinary skill in the art that other embodiments and examples may perform similar functions and/or achieve like results. All such equivalent embodiments and examples are considered to be fully encompassed in scope by the claims appended hereto.

## Claims

1. A multi-channel optical transmitter, comprising:
a laser engine including a plurality of N individual laser devices operating at different wavelengths, with each individual laser device responsive to a unique input data signal and creating a plurality of N optical signals operating at wavelengths λ₁ - λ_{N} and referred to as a plurality of N channels;
a wavelength-division multiplexer receiving as inputs the plurality of N optical signals for combining the plurality of N optical signals to create a single, N-channel output signal for transmission along an optical fiber signal path; and
a GT etalon-based dispersion compensator disposed between the laser engine and the wavelength-division multiplexer, the GT etalon-based dispersion compensator including individual GT etalon devices disposed along signal paths associated with identified wavelengths within the range λ₁ - λ_{N} that are subject to chromatic dispersion during transmission along the optical fiber signal path, wherein each GT etalon device creates phase-shifted predistortion to signals at selected wavelengths passing therethrough and the number of individual GT etalon devices disposed along each channel is determined as a function of the level of chromatic dispersion experienced by the wavelength utilized by the channel.

2. The multi-channel optical transmitter of claim 1, wherein the GT etalon-based dispersion compensator comprises a plurality of transmissive dispersion compensators, each transmissive dispersion compensator comprising
a polarizing beam splitter responsive to a linearly-polarized input signal propagating along an optical axis of the multi-channel optical transmitter and redirecting the linearly-polarized input signal along an orthogonal signal path;
a first quarter-wave plate responsive to the re-directed linearly-polarized input signal for converting into a circularly-polarized signal;
a GT etalon disposed adjacent to the first quarter-wave plate and responsive to the circularly-polarized signal for creating a phase-shifted version of the circularly-polarized signal as an output, wherein a reflective surface of the GT etalon directs the phase-shifted version through the first quarter-wave plate again to be converted back into a linear-polarized signal including a phase-shifted property and thereafter into the polarizing beam splitter;
a second quarter-wave plate disposed adjacent to the polarizing beam splitter and disposed to intercept the linear-polarized, phase-shifted signal; and
a highly reflective element disposed on the second quarter-wave plate, where the combination of the second quarter-wave plate, highly reflective element and polarizing beam splitter function to return the phase-shifted signal back into its original linear polarization state, the phase-shifted signal having the original linear polarization state thereafter exiting the polarizing beam splitter along the optical axis as the output signal from the GT etalon-based compensator.

3. The multi-channel optical transmitter of claim 2, wherein a cascaded arrangement of two or more transmissive dispersion compensators is disposed in the signal path of a selected channel to provide a larger amount of pre-compensation to an optical signal propagating at a wavelength known to experience significant chromatic dispersion.

4. The multi-channel optical transmitter of claim 1, wherein the wavelength-division multiplexer comprises a Z-block multiplexer configuration.

5. The multi-channel optical transmitter of claim 4, wherein the GT etalon-based dispersion compensator is integrated with the Z-block multiplexer configuration to form a monolithic component.

6. The multi-channel optical transmitter of claim 6, wherein the GT etalon-based dispersion compensator comprises
an optical plate disposed along an angled output surface of the Z-block multiplexer configuration;
a plurality of M highly reflective elements disposed in a spaced-apart arrangement on an output surface of the optical plate, each individual highly reflective element defining a first reflective surface of a GT etalon; and
a plurality of M input reflective elements disposed along an interface between the Z-block multiplexer configuration and the optical plate, the plurality of M input reflective elements aligned with the plurality of M highly reflective elements in a manner that creates a plurality of M cascaded GT etalon devices along the extent of the optical plate.

7. **In** a WDM transmission system, an arrangement comprising
a wavelength-division multiplexer receiving as inputs a plurality of N optical signals operating at a plurality of different wavelengths λ₁ - λ_{N} for combining the plurality of N optical signals to create a single, N-channel output signal for transmission along an optical fiber signal path; and
a GT etalon-based dispersion compensator disposed at the input of the wavelength-division multiplexer, the GT etalon-based dispersion compensator including individual GT etalon devices disposed along signal paths associated with identified wavelengths within the range λ₁ - λ_{N} that are subject to chromatic dispersion during transmission along the optical fiber signal path, wherein each GT etalon device creates phase-shifted predistortion to signals at selected wavelengths passing therethrough and the number of individual GT etalon devices disposed along each channel is determined as a function of the level of chromatic dispersion experienced by the wavelength utilized by the channel.
